Europäisches Patentamt

European Patent Office

Office européen des brevets

(11) Publication number: **0 265 403**
**A1**

## (12) EUROPEAN PATENT APPLICATION

(21) Application number: **87850299.6**

(22) Date of filing: **06.10.87**

(51) Int. Cl.⁴: **B 23 C 3/12**
**B 27 C 5/10**

(30) Priority: **16.10.86 SE 8604388**

(43) Date of publication of application:
**27.04.88 Bulletin 88/17**

(84) Designated Contracting States: **DE FR GB IT**

(71) Applicant: **Henry Wiklund & Co. AB**
**Bäckvägen 1**
**S-820 10 Arbrä (SE)**

(72) Inventor: **Ekengren, Torsten**
**Skolvägen 1**
**S-820 72 Strömsbruk (SE)**

(54) A chamfering device in hand-held power tools.

(57) A chamfering device for a hand-held power tool driving a rotary file or cutter member (10) having a mainly conical cutting head (11). The device comprises a portion (16, 17, 19) which with a play encloses part of the circumference of the cutting head and which has an opening (20) which exposes the remaining part of said circumference for engagement with a workpiece (21). The cutting depth during said engagement is determined by support surfaces (18, 22, 23) intended for contact with the workpiece in the axial and radial directions relatively to the axis of rotation of the cutting head (11).

By means of a first part (2), the device is intended to be attachably and removably fastened to a front portion (1) of the power tool, in an axially adjustable position. A second part (12) is rotatably connected to the first part (2) and comprises the opening (20) and the support surfaces (18, 22, 23). At least one radial support surface (22,23) is so located and designed that, when the chamfering device is moved along a workpiece (21), said surface is, by means of the contact pressure against a lateral surface (25) of the workpiece, guided to follow changes of direction of said lateral surface, whereby the rotatable second part (12) is kept so oriented that the cutting head (11) remains exposed relatively to the workpiece.

FIG. 1

**Description**

A chamfering device in hand-held power tools

The present invention relates to a chamfering device capable of being fitted on power tools of the common type for driving rotary files and the like.

When working in hard materials, such as steel, the device is mainly intended for producing chamfers having a relatively small depth, down to approx. 1 mm, the purpose of the chamfering being, as a rule, to deburr edges of workpieces. Such chamfering/deburring is required, for example, for the edges at ends of tubes and section bars, both internally and externally, and for the edges of drilled holes, etc. For softer materials, the device can also be designed to produce an increased cutting depth.

It is not possible, without special arragements, to hold and guide accurately with one's hands only, a power tool fitted with a rotary, conical cutter or file, so that a neat and even chamfer is produced, but there will be problems with the working member's getting stuck, jerking and jumping, as it is not possible, with one's hands, to hold the tool completely rigidly and with an exact amount of pressure against the work surface. in addition, it is not possible to maintain an exact chamfering angle, but the chamfer will be inclined in varying directions.

Therefore, the power tool must be supplemented by guide members which are brought to bear against the workpiece and which thereby determine the depth and angle of the chamfer. Several chamfering devices with such guide members are known which, however, in the first place are relatively bulky and complicated in their design, so that they are relatively expensive, and in the second place are not of the universal type but are restricted to a certain application, such as, for example, the chamfering of a straight edge of a workpiece which offers free surfaces and ample room for the required guide members.

In accordance with the French patent No. 2.163.280 (72.46536) a hand-held chamfering tool is suggested, which is intended for being used also on curved surfaces and when the free room around the portion to be tooled is restricted. However, the chamfering device built together with the power tool is impared by several disadvantages which strongly reduce its usefulness and good func tioning. A restriction results already from building the chamfering device fixedly to the power tool, as in this way the power tool is limited to one single type of application. In addition, the technical solution chosen involves further limitations and disadvantages. The shaft of the rotary cutter/file is intended to be fitted in a sleeve, which is fitted on the outgoing shaft of the power tool and which protrudes a distance from the outer end of said outgoing shaft. The sleeve is enclosed in a tubular housing extending from the front end of the power tool. To the front end of the housing an extension piece is screwed, which encloses the cutter or file head and is fitted with an opening, through which a workpiece can be brought into contact with said head, and with guide surfaces intended to bear against the workpiece. To fit the shaft of the cutter or file in the sleeve which forms an extension of the outgoing shaft of the power tool is unsuitable for the reason that the cutter or file head will be positioned a long distance away from the bearing of the shaft of the power tool and, further, the sleeve adds a considerable amount of flywheel moment. Therefore, when lateral forces are imparted to the cutter or file head during its operation, the bearing will be loaded in a very unfavourable way. Consequently, it must be regarded as out of the question to drive the shaft at a high enough speed to obtain a satisfactory cutting capacity of the cutter or file member. the wording speed should, namely, be at least 200,000 rpm and could, at an advantage, be considerably higher.

A further disadvantage is that the abovementioned opening for receiving workpieces is fixed in relation to the power tool. The operator must, therefore, turn the power tool repeatedly, so that the opening keeps facing the word surface. For work around edges of holes or around corners this is inconvenient, since the tool's supply cable or hose is a hindrance and since it is necessary to use both hands, so that no hand is free to hold lighter workpieces in place.

The object of the present invention is to obtain a chamfering device of the kind referred to above, in which the deficiencies of the previously suggested solutions referred to in the foregoing are eliminated. More specifically, what is attained with the present invention is

that the chamfering device can easily be fitted on and removed from a standard-type power tool, which reduces the cost of procurement of the device and makes it possible to utilize the power tool to an increased extent,

that the device makes it possible to fit the cutter or file member in the ordinary chuck or collet of the power tool with the cutter or file head extending a short distance outside it and without the use of any supplementary parts which increase the rotating mass, whereby a high working speed can be used,

that the device can be made to keep a correct working position when following a curved work surface only with the help of the pressure used to hold it against the workpiece, with no need for the operator to turn the device,

and that, furthermore, in a way which is in itself known earlier, a good guiding of the rotating cutter or file member relative to the workpiece is obtained both axially and radially, as well as good accessibility in cases of limited free room around the point of tooling and in corners as well as in holes having a small radius, in addition to which the desired chamfering depth is easily adjustable.

These objects have been attained with the chamfering device in accordance with the invention as it is defined in Claim 1.

An embodiment of the chamfering device in accordance with the invention is described in closer detail with reference to the attached drawing, in which

Fig. 1 shows a sectional side view of the device fitted on a partially shown power tool fitted with a conical file, and

Fig. 2 an end view of the device, viewed from its front end.

In the drawing, the numeral 1 denotes the front portion of a power tool, and 2 a rear portion of the chamfering device, intended to be fitted as a first, fixed extension part on the front portion of the power tool. For example, the extension part 2 can be slotted (not shown) and tightened around the power tool with the help of a member 3 resembling a hose clamp, which is fitted with lugs 4 and a clamping screw 5. The power tool exemplified is pneumatically operated and is provided with a number of exhaust openings 6 for the exhaust air. To carry off this air, the extension part 2 can also be provided with a number of exhaust openings 7.

The power tool has an outgoing shaft 8 and a tool holder 9, for example a chuck, in which a rotary cutter or file member 10 is fitted which has a conical cutting head 11. On the first extension part 2, a second extension part 12 is fitted and rotatably connected to it with the help of bearings 13, 14. The bearing 13 is exemplified as a ball bearing and the bearing 14 as a plain bearing which, for example, can be fastened on the first extension part 2 by means of a press fit. A lock ring 15 supports against the plain bearing 14 and engages a groove in the second extension part 12 to secure this part axially.

The extension parts 2 and 12 are mainly cylindrical and form a housing which with a play encloses the outgoing shaft 8 of the power tool, the tool holder 9 and the rotary file or cutter 10 including its cutting head 11, and which is coaxial with these. The forward extension part 12 is tapering or narrowing down towards its front end by means of an inclined outer wall 16 which continues as a short cylindrical portion 17 having an end surface 18 which faces in the axial direction. From the end surface 18, and having a diameter which is somewhat smaller than the diameter of the cylindrical portion 17, the extension part 12 is continued and ended by another cylindrical portion 19, approximately 3/4 of which have been cut away flush with the end surface 18. Hereby, an opening 20 is formed in the extension part 12 which lays the cutting head 11 open to engage a workpiece 21. The remaining 1/4 of the partly cut away cylindrical portion 19 is defined by two lateral surfaces 22, 23. These form support surfaces against the workpiece 21 which limit the engagement of the cutting head 11 with the workpiece in the radial direction, while its engagement in the axial direction is limited by the end surface 18. The bearing 13 between the extension parts 2 and 12 should be protected against the penetration of cuttings which are thrown about and which are produced during the operation of the cutting head 11. For example, a felt washer 24 or the like can be provided as a seal between the extension parts.

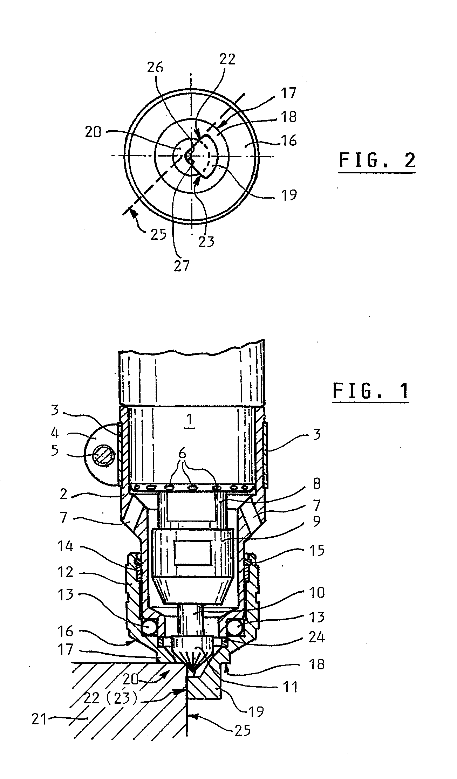

The chamfering device in accordance with the invention functions in the following way: The desired chamfering depth is adjusted by securing the first extension part 2 in the suitable axial position on the front portion 1 of the power tool with the help of the fastening member 3-5, whereby the position of the cutting head 11 is determined in relation to the opening 20 and the support surfaces 18, 22, 23. When the power tool has been started and the cutting head 11 thereby made to rotate, the chamfering device is put into contact with a workpiece 21 as shown from Fig. 1. In Fig. 2, also, the lateral surface 25 of the workpiece is indicated as a dashed line. When the operator moves the chamfering device along this surface, the second extension part 12 is turned so that either the support surface 22 or the support surface 23 is, due to the contact pressure used, kept in contact with the lateral surface 25 of the workpiece and is constantly oriented in relation to said surface; i.e. if the work surface is curved and changes direction, the support surface, and thereby the extension part 12, is turned a corresponding amount. Consequently, the extension part 12 is kept oriented so that the cutting head 11 keeps engaging the workpiece through the opening 20, even if the lateral surface 25 of the workpiece is curved. In this way, the operator can comfortably work along a circular path, for example to deburr the edges of round holes, without having to turn the power tool with his hands to the exact position required at each given moment. To turn the power tool a complete turn would also result in problems with twisting of its electric cable or compressed air hose. Wheen tooling surfaces which change directions sharply, such as in the case of right-angle corners, it is not always possible to make the support surface 22 or 23 to follow the change of direction automatically, but the operator must use one hand to make a turning movement of the second extension part 12 just when passing the corner, whereupon the support surface again assumes and keeps the right position. This, too, is considerably more convenient than to have to turn the entire power tool and keep it correctly oriented.

The length of the support surfaces 22, 23, which is determined by the diameter of the partly cut-away portion 19, must be sufficient to ensure that the lateral surface 25 of the workpiece is followed without the support faces turning in relation to it. On the other hand, the dimensions of the portion 19 should not be larger than required, since this reduces the possiblity of deburring small holes. To improve the following of the lateral surface 25 of the workpiece, it sould be easy to turn the extension part 12 around the extension part 2, so that the part 12 does not resist the guiding effect produced by the support surface 22 or 23. The bearings 13, 14 should therefore ensure a small amount of resistance against turning, which is the reason why the bearing 13 -which carries the main part of the working load - is exemplified as a ball bearing.

In order that the abovementioned following of the lateral surface 25 of the workpiece shall function well without the need to make the support surfaces 22, 23 unnecessarily long, the support surfaces should be located as shown from Fig. 2. In the figure, a short, imaginary radial line 26 is indicated. From the point of contact with the radius 26, the support surface 22 describes, in one direction, a curve following the radium downwards and to the left in the figure, and in the opposite direction it extends tangentially upwards and to the right. In an analoguous way, the support surface 23 is related to an imaginary radial line 27. If one of the support surfaces 22 or 23 is moved along a work surface with its tangentially extending portion pointing ahead in the direction of movement it will, since it extends a distance ahead of the axis of rotation of the second extension part 12, prevent rotation relatively to the lateral surface 25 of thw workpiece. If, when engaged with the workpiece, the respective support surface, for example surface 22, is not pointing ahead as described above, it will, as soon as it is moved along the workpiece, roll on its curved portion located between the radial lines 26, 27, so that the other support surface 23 comes to rest against the workpiece and, thereby, is oriented with its tangentially extending portion in the forward direction. Thus, the device is automatically oriented in the correct way as soon as a work operation is started. The described arrangement of two support surfaces 22, 23 at an angle to one another and extending tangentially from a short radius extending from the axis of rotation of the device ensures the maximum guiding effect with the minimum reduction of accessibility due to the influence of the length of said surfaces.

## Claims

1. A chamfering device in hand-held power tools for driving rotary files and the like, intended to be used together with a file or cutter member (10) having an at least substantially conical cutting head (11), said device comprising a portion (16, 17, 19) which, with a play, encloses part of the circumference of the cutting head and has an opening (20), which exposes the remaing part of said circumference for engagement of same with a workpiece (21) and which, to determine the cutting depth during said engagement, comprises support surfaces (18, 22, 23) for contact with the workpiece both axially and radially relatively to the axis of rotation of the cutting head (11), **characterized by** a first extension part (2) capable of being attachably and removably fastened, with the help of fastening members (3, 4, 5), on the front portion (1) of the power tool housing in an axially adjustable position, and a second extension part (12) rotatably connected to the first part (2) and being coaxial with the axis of rotation of the cutting head (11), said second extension part comprising the opening (20) and the axially and radially effective support surfaces (18, 22, 23) against the workpiece (21), at least one radially effective support surface (22, 23) being so located that, in the region of one of its ends, it is tangent to an imaginary, short radial line from the axis of rotation of the cutting head (11) and extends tangentially to the region of its opposite end which, thereby, is more distant from said axis, whereby said support surface (22, 23), when moved along a workpiece (21) with said more distant end pointing ahead in the direction of movement, is guided, by contact pressure against a lateral surface (25) of said workpiece, to follow changes of direction of said lateral surface and thereby to impart turning movements to the rotatable second extension part (12) which correspond to said changes and cause the cutting head (11) to maintain an exposed position relatively to the workpiece for the tooling of same.

0265403

FIG. 2

FIG. 1

| | DOCUMENTS CONSIDERED TO BE RELEVANT | | EP 87850299.6 |
|---|---|---|---|

| Category | Citation of document with indication. where appropriate, of relevant passages | Relevant to claim | CLASSIFICATION OF THE APPLICATION (Int. Cl.4) |
|---|---|---|---|
| A | <u>US - A - 3 346 026</u> (A. PLUCHINO)<br>    * Fig. 1,2,6; column 3, lines 59-63 *<br>    -- | 1 | B 23 C 3/12<br>B 27 C 5/10 |
| A | <u>DE - A1 - 3 216 929</u> (BUMÜLLER)<br>    * Fig. 1,2; page 13, line 18 - page 14, line 17 *<br>    -- | 1 | |
| A | <u>DE - A1 - 3 008 357</u> (E. LUTZ)<br>    * Fig. 1,4 *<br>    ---- | 1 | |

| TECHNICAL FIELDS SEARCHED (Int. Cl.4) |
|---|
| B 23 B 45/00 |
| B 23 C  3/00 |
| B 23 C  7/00 |
| B 23 C  9/00 |
| B 23 D 67/00 |
| B 23 D 69/00 |
| B 23 D 75/00 |
| B 23 D 77/00 |
| B 23 D 79/00 |
| B 23 D 81/00 |
| B 27 C  5/00 |

The present search report has been drawn up for all claims

| Place of search | Date of completion of the search | Examiner |
|---|---|---|
| VIENNA | 15-12-1987 | NIMMERRICHTER |